# EUROPEAN PATENT SPECIFICATION

(11) **EP 3 914 062 B1**
(45) Date of publication and mention of the grant of the patent: **07.06.2023**
(21) Application number: 20702930.7
(22) Date of filing: 22.01.2020
(51) Int. Cl.: A01C 7/04, A01C 7/10, A01C 21/00, A01G 9/08

(54) **SEEDER AND SEEDING METHOD**
SÄMASCHINE UND SÄVERFAHREN
SEMOIR ET PROCÉDÉ D'ENSEMENCEMENT

(30) Priority: 22.01.2019 NL 2022432
(43) Date of publication of application: 01.12.2021
(73) Proprietor: Viscon Group Holding B.V., 3295 KH 's-Gravendeel (NL)
(72) Inventor: VISSER, Anthony, 3295 CT 'S-Gravendeel (NL); NEUTEBOOM, Jasper, 2315 BL Leiden (NL)
(74) Representative: Arnold & Siedsma
(86) International application number: PCT/NL2020/050032
(87) International publication number: WO 2020/153841

(56) References cited:
- EP-A1- 3 135 090
- US-A1- 2018 338 409
- US-B1- 9 661 805

## Description

The present disclosure relates to a seeder to deposit and a seeding method of depositing seeds in trays or substrate in a pattern of seed positions.

Present day seeders are plagued by a less than full fill of the pattern of seed positions in trays or substrate. Seeds are a highly expensive commodity and waste also of tray or substrate space is undesired. To the best knowledge of the inventors of the present disclosure, the current state-of-the-art relies on visual inspection to determine whether seed positions in the pattern do not contain seeds, to thereafter manually augment seeds at untaken positions to fill the pattern. However, this is hampered, if a substrate layer is in an automated process laid over the already present substrate or on and in the tray. Consequently, this automated process must be interrupted for the visual inspection and manual augmentation, or the visual inspection is rendered impossible by the added layer of substrate.

US-2018/338409 relates to a seeding wheel, capable of seeding one line of seeds at a time. When a seed is missing in a seed holding position on or of the seeding wheel, a seeding wheel driving motor is accelerated, to ensure that a seed is released at an intended seed position at a predetermined distance from a previously deposited seed on, over or of the substrate or trays, to avoid missing release of a seed from the conveyor at any such designated or intended seed position. However, acceleration of the wheel is only a viable option for single line releasing seeding wheels forming conveyors, while drums depositing and releasing a plurality of lines of seeds at desired intermediate distances is much more efficient, because many more passes of the seeding wheel are required to even approximate full coverage with seeds of seed positions in the pattern. Also, keeping subsequently deposited lines of seeds parallel may prove to be cumbersome.

US-9 661 805 relates to a system having a drum enabling deposition of multiple parallel lines of seeds at desired intermediate distances, and is therefore considered to constitute closer prior art. This disclosure encompasses a diagnostic module and a report module. The report module may be configured to generate a notification for communicating the information generated by the diagnostic module to an operator. The notification may take any suitable form including an alarm emitted through speaker, and/or text and/or graphics displayed through a display. In some embodiments, the notification may include a chart summarizing diagnostic information from an operator-defined time period including, for example, the number skips (i.e., the number of error signals associated with "absence of seed" detections), the number of multiple or excess seed deliveries (i.e., the number of error signals associated with "two or more seeds" detections), the projected yield of seedlings, and/or indication of the cause or source of the error signals.

The present disclosure provides a novel and inventive approach to achieving a full fill of the pattern of seed positions, with a seeder, configured to deposit seeds in trays or substrate in a pattern of seed positions, comprising:
- a seed supply;
- a conveyor configured to transfer seeds from the seed supply, with the seeds organized in the pattern of seed positions defined by seed holding positions of the conveyor, to the trays or substrate and release extracted seeds in the pattern of seed positions into the trays or substrate,
- at least one detector comprising at least a light source, such as a light beam and/or an array of LED's, and a sensor, such as at least one camera and/or a line scanner, and configured to detect seeds at seed holding positions of the conveyor in transfer from the seed supply to the trays or substrate and generate a signal,
wherein the light source is obliquely oriented at seed holding positions of the conveyor, relative to a surface of the conveyor, to generate grazing light on or over the conveyor, for seeds to cast detectable shadows on the surface of the conveyor, and the sensor is oriented at the surface of the conveyor to detect shadows on the conveyor, cast by seeds at seed holding positions.

The present disclosure also relates to a seeding method of depositing seeds in trays or substrate in a pattern of seed positions, comprising:
- supplying seeds;
- using a conveyor to transfer supplied seeds, with the seeds organized in the pattern of seed positions defined by seed holding positions, to the trays or substrate;
- releasing extracted seeds in the pattern of seed positions into the trays or substrate,
- detecting seeds at any seed holding positions in the pattern, and
- generating a signal;
wherein detecting seeds and generating the signal comprises generating grazing light on or over the conveyor, for seeds to cast detectable shadows on the surface of the conveyor, and detecting shadows on the conveyor, cast by seeds at seed holding positions.

The signal may indicate at least one seed related aspect from a group at least comprising: empty seed holding positions, from which seed positions, that remain empty in the pattern of seed positions in the trays or substrate after transferring the supplied seeds to the trays or substrate, is deducible; presence of part of a seed at any seed holding positions; multiple seeds at any seed holding positions; seed coating at any seed holding positions. A coating may be detected by analyzing the shadow thereof, for example having a higher light intensity than in case of a seed. Multiple seeds and/or a broken (part of a seed) at any given seed position may be detected by the size of the shadow, for example relative to an average size of a single seed.

The method may further comprise using a filler for augmenting, after releasing the seeds into the trays or substrate and based on the signal, seeds in the trays or substrate at the seed positions in the pattern, of which it is deducible from the signal that these remain empty in the pattern of seed positions in the trays or substrate after transferring the supplied seeds to the trays or substrate. Also disclosed is a non-transitory computer-readable storage medium storing instructions, that when executed by a processor, cause the processor to perform the method.

This novel and inventive approach to achieving a full fill of the seed positions in the pattern involves an inspection of the seed holding positions on or of the conveyor, which transfers seeds from the supply to the trays or substrate. Thereby, determination whether a full fill is going to be achieved, can be automated. The end result is determined on the basis of the filling degree of the corresponding pattern of seed positions on or of the conveyor, instead of relying on checking of the end results, which may be hampered by a superposed layer of substrate. Moreover, the signal may indicate empty seed holding positions, from which seed positions, that remain empty in the pattern of seed positions in the trays or substrate after transferring the supplied seeds to the trays or substrate, is deducible. Thereby, a processor controlling the seeder or the filler itself can be accurately informed of the seed positions in the trays or substrate, that are anticipated to remain empty after the transfer, and seeds can be accurately augmented in precisely those seed positions in the trays or substrate that remain empty.

The present disclosure also involves a number of preferred embodiments set out in the dependent claims and detailed in the below embodiment description.

In a possible embodiment, the conveyor may comprise a transfer surface with arranged thereon or therein the seed holding positions in correspondence ing with the pattern of seed positions.

In an alternative or additional embodiment, the conveyor may comprise a seed transfer drum.

In an alternative or additional embodiment, the conveyor may comprise seed holders connected to an underpressure or vacuum connection for attraction of seeds. Then, if the seeder further comprises the transfer surface, the seed holders may be provided at the seed holding positions.

The seeder according to the present disclosure is such that the detector comprises a light source and a sensor, such as a camera. In such an embodiment, the light source is oriented at seed holding positions of the conveyor. As a further option, when the conveyor may further comprise a transfer surface, the sensor may be configured to generate the signal corresponding with absence of seeds at seed holding positions, based on absence of shadows from seeds on the conveyor. Then, at least the light source is obliquely oriented at the transfer surface to generate grazing light on or over the conveyor and/or more in particular on or over the transfer surface thereof, for a seed to cast a better detectable shadow on the conveyor. The sensor may be oriented at an essentially perpendicular orientation onto the surface of the conveyor, and may not need to be oriented at a seed holding position, but is oriented to detect shadows of seeds on or over the surface of the conveyor. In the above acknowledged prior art according to US-9 661 805 the camera is disposed at the same side relative to seeds as the light source and configured to detect light reflected off seeds. In contrast, according to the present disclosure, the sensor, such as a camera, may focus on shadows cast by seeds on the conveyor, and more in particular on a transfer surface thereof, at a side opposite the light source relative to the seeds. This results in a higher contrast when determining the presence or absence of seeds at seed holding positions. By the simple and elegant measure of grazing light, shadows are enlarged representations (relative to the actual size of seeds) of the presence of seeds at seed holding positions, and facilitates detection considerably over the prior art, which even refers as computationally cumbersome processes, like triangulation, to sufficiently accurately be able to determine whether sufficiently large seeds are disposed at the seed holding positions. The signal may indicate at least one seed related aspect from a group at least comprising: empty seed holding positions, from which seed positions, that remain empty in the pattern of seed positions in the trays or substrate after transferring the supplied seeds to the trays or substrate, is deducible; presence of part of a seed at any seed holding positions; multiple seeds at any seed holding positions; seed coating at any seed holding positions. A coating may be detected by analyzing the shadow thereof, for example having a higher light intensity than in case of a seed. Multiple seeds and/or a broken (part of a seed) at any given seed position may be detected by the size of the shadow, for example relative to an average size of a single seed.

Additionally or alternatively, the seeder according to the present disclosure may be such, that the filler comprises a robot arm. Then, the seeder may be such, that the robot arm comprises a seed grabber. However, also possible, is a drum with the same pattern of holding positions with controllable vacuum connections to only attract seeds at seed positions in the pattern that are missing from the pattern, to augment the prior incomplete fill of the trays by the conveyor, for example a first drum for attracting seeds at all seed positions in the pattern and a selective second drum to augment the seeds missing from the pattern.

Additionally or alternatively, the seeder according to the present disclosure may comprise a controller connected to the detector and the filler, and configured to drive the filler based on the signal from the detector.

The basic method of the present disclosure is set out above.

Further, the seeding method may be such that the conveying involves using a transfer surface with arranged thereon or therein seed holding positions corresponding with the pattern of seed positions.

Additionally or alternatively, the seeding method may be such that the detecting involves using a light source and a sensor, such as a camera, and orienting the light source and the sensor at seed positions in the pattern.

When use of the transfer surface and orienting the light source and the sensor are embodied, the seeding method may further comprise, using the sensor, generating the signal corresponding with absence of seeds at the seed holding positions, based on absence of shadows from seeds on the surface.

Following the above reference to aspects of the present disclosure in terms and expressions of the appended claims, below an embodiment description is provided with reference to the appended drawing exhibiting potential embodiments of the present disclosure, to which the scope of protection for the present disclosure is by no means limited and may even encompass, in particular for specific juris dictions alternatives for aspects and features of appended independent claims. In distinct figures of the appended drawing the same or similar reference signs may be used to identify the same or similar features, aspects, element, components and functional groups thereof, even if referenced in relation to distinct embodiments. In the drawing:

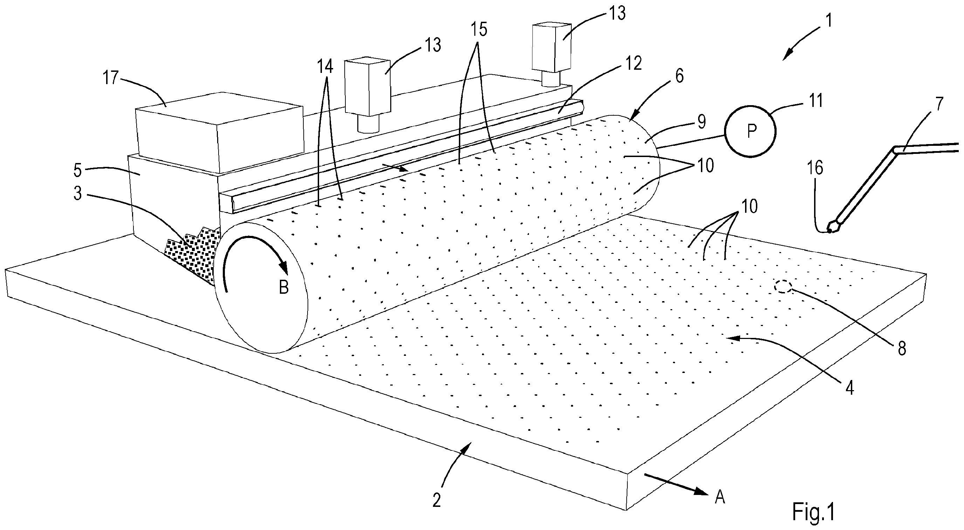

Figure 1 shows schematically an embodiment of a seeder and seeding method according to the present disclosure.

According to the present disclosure a seeder 1 is provided, which is configured to deposit seeds 3 in trays 2 or substrate in a pattern 4 of seed positions. Seeder I comprises a seed supply 5 and conveyor drum 6 configured to extract seeds 3 from seed supply 5 with the seeds organized in the pattern 4 of seed positions and release extracted seeds into tray 2. In the shown embodiment, trays 2 move along and under conveyor drum 6. Alternatively, seeder 1 can be made to move over soil or substrate, to deposit seeds 3 in the pattern 4 in or in the soil or substrate.

Returning to the embodiment of figure 1, trays 2 pass under conveyor drum 6 in the direction of arrow A, while conveyor drum 6 is rotated in the direction of arrow B. Distances between seed positions in pattern 4 may be different from intermediate circumferential distances between seeds 3 on or against conveyor drum 6, depending on differences between rotational speed of conveyor drum 6 and linear speed of trays 2 passing under conveyor drum 6.

Seeder 1 further comprises a detection system with at least one detector configured to determine whether the conveyor drum 6 has not extracted a seed at any of the seed positions in the pattern 4 and generate a corresponding detection signal. Additionally or alternatively, the detector may generate a signal indicative of at least one seed related aspect from a group at least comprising: empty seed holding positions, from which seed positions, that remain empty in the pattern of seed positions in the trays or substrate after transferring the supplied seeds to the trays or substrate, is deducible; presence of part of a seed at any seed holding positions; multiple seeds at any seed holding positions; seed coating at any seed holding positions. A coating may be detected by analyzing the shadow thereof, for example having a higher light intensity than in case of a seed. Multiple seeds and/or a broken (part of a seed) at any given seed position may be detected by the size of the shadow, for example relative to an average size of a single seed.

This detection system is oriented at the conveyor drum. To achieve a full fill of the seed positions in the pattern 4 on or in trays 2 involves inspection of the conveyor drum 6, which transfers seeds 3 from supply 5 to trays 2. Thereby, determination whether a full fill is going to be achieved, can be automated. The end result in terms of seeds 3 at all seed positions in pattern 4 on or in trays 2 is determined on the basis of the filling degree of the corresponding pattern of seed positions on or of the conveyor drum 6. This avoids a need of having to check end results on or in trays 2.

Further, seeder 1 comprises an optional filler, here in the form of a robot arm 7, to augment seeds in trays 2 at empty seed positions 8, without seeds, based on the detection signal from the detection system.

More in detail, conveyor drum 6 comprises a transfer surface 9 with arranged thereon or therein seed holding positions 10 in a pattern corresponding with the pattern 4 of seed positions.

In an alternative or additional embodiment, the conveyor drum may be replaced by any suitable conveyor, such as a transfer plate.

Returning to the figure 1 embodiment, conveyor drum 6 comprises seed holders at seed holding positions 10. Seed holders may be embodied as simple as small holes in the transfer surface of conveyor drum 6, which may have a hollow interior, which in turn may be connected to an evacuation pump 11. Through connection of conveyor drum 6 to such an underpressure or vacuum connection, seeds are attracted against the holes at seed holding positions 10 distributed around the circumference of conveyor drum 6.

More in detail, the detection system of seeder 1 according to the present disclosure, comprises at least one detector, formed by a at least one light source, possibly in the form of a light beam 12, for example comprising an array of LED's, and a sensor, such as one or more than one camera 13. The cameras may be embodied as a line scanner, in addition to or instead of distinct cameras 13. Light beam 12 is elongate and extends parallel to the length direction of conveyor drum 6. Light is emitted from light beam 12 towards conveyor drum 6. so that light source is oriented at seed holding positions 10 distributed in, over or on transfer surface 9 of conveyor drum 6. More in particular, the light source in the form of light beam 12 is obliquely oriented at the transfer surface 9, i.e. at an angle relative to a radial direction of the conveyor drum 6, to generate grazing light on or over the transfer surface 9. As a consequence, seeds 3 held at seed holding positions 10 cast shadows 14 on transfer surface 9, which can be detected using the sensor, for example in the form of the at least one camera 13 or line scanner. The camera(s) 13 or line scanner may be substantially radially oriented at the surface of the conveyor drum 6, whereby the sensor in the form of the at least one camera 13 or line scanner is configured to generate the detection signal corresponding with absence of seeds 3 at seed holding positions 10, based on absence of shadows 14 from seeds on the surface. However, presence or absence of seed at any particular seed position may alternatively for shadow detection also be achieved by detection of seed itself, for example based on recognition of surface texture of seeds, where a difference with surface texture of the conveyor drum may be detectable as a tell-tale sign of the presence or absence of seed at seed positions on the conveyor drum. More than one type of detection may be employed (shadow + seed surface texture, or any other). Detection may additionally or alternatively be directed at at least one seed related aspect from a group at least comprising: presence of part of a seed at any seed holding positions; multiple seeds at any seed holding positions; seed coating at any seed holding positions. A coating may be detected by analyzing the shadow thereof, for example having a higher light intensity than in case of a seed. Multiple seeds and/or a broken (part of a seed) at any given seed position may be detected by the size of the shadow, for example relative to an average size of a single seed.

In the representation of seeder 1 according to the present disclosure in figure 1, a row of seed holding positions 10 has two vacant positions, where seeds 3 are missing. As trays 2 move along in the direction of arrow A and conveyor drum 6 rotates in the direction of arrow B, when any row of seed holding positions 10 of conveyor drum 6 reaches a lowermost position, attraction of seeds is interrupted, for example by connections to ambient pressure. A controller can compute easily which seed positions in pattern 4 in or on trays 2 will remain empty in the substrate or tray 2, when it is known which seed holding positions 10 in or on conveyor drum 6 are empty / vacant positons 15. Such a controller may use the detection signals from the sensors in the form of the at least one camera 13 and/or line scanner, and direct the filler in the form of robot arm 7 to augment seeds at vacant positions in the seed positions in pattern 4 in or on trays 2, which vacant positions 8 are known far in advance, relative to inspection of a fill degree based on the results of seeding.

Although seeder 1 according to the embodiment of figure 1 has a robot arm 7 as an embodiment of the filler, and robot arm 7 may comprise a seed grabber 16, it is alternatively possible to use a second drum with the same pattern of seed holding positions with individually controllable vacuum connections for all seed holding positions to only deposit seeds at vacant / empty seed positions 8, to augment the prior incomplete fill of trays 2 by conveyor drum 6, for which exemplary alternative embodiment the conveyor drum 6 is a first drum for attracting seeds at all seed positions in the pattern and a selective second drum (not shown) is additionally provided to augment the seeds missing from the pattern. Alternatively for a filler or robot arm, the controller may simply keep track of the conveyors filling efficiency, and decide that the conveyor is up for cleaning, other maintenance or even replacement, if/when a filling degree falls to below a predetermined threshold, for example if less than 80% of the seed positions are filled with seeds. Through shadow measurement, for example in contrast with reflection measurement, it is possible to discriminate between seed, broken seed, multiple seed and seed coating, to more accurately determine whether a seed is actually put into a seed position.

Seeder 1 may comprise the controller for example in the form of a computer 17 (schematically represented as a box), connected to at least the sensor(s) 13 and the optional filler 7, and configured to drive the filler 7 based on the detection signal from the sensor(s) or simply monitor the detection signal, in particular indicating and identifying specific empty / vacant seed holding positions 10 of conveyor drum 6, and include as empty / vacant seed holding positions, those where seed coating or broken seed is held, from which future empty / vacant seed positions in the pattern 4 in or on trays 2 is deducible.

The above described exemplary embodiment of seeder 1 in figure 1 is likewise illustrative of the basic method of the present disclosure.

The seeding method is in this particular embodiment that the conveying is performed using transfer surface 9 with arranged thereon or therein seed holding positions 10 corresponding with pattern 4 of seed positions in trays 2 (or soil / substrate). The detecting involves using light source 12 and sensor 13, such as one or more than one cameras 13, and orienting light source 12 and the sensor 13 at seed positions in the pattern of seed holding positions 10 in or on conveyor drum 6. By using transfer surface 9 and orienting light source 12 and sensor 13 thereon, and by using the sensor 13, detection signal can be generated that correspond with absence of seeds at seeds holding positions of drum 6 which relates to future empty / vacant seed positions in pattern 4 on or in trays 2. This detection is in particular based on absence of shadows 14 from seeds 3 on conveyor surface 9, when light source 12 generates streak light over conveyor surface 9.

Evidently the present disclosure allow for many additional and / or alternative embodiments relative to those explicitly depicted in the appended drawings and described above in relation thereto. Consequently the scope of protection is defined by the appended claims.

## Claims

1. Seeder (1) configured to deposit seeds (3) in trays (2) or substrate in a pattern (4) of seed positions, comprising:
- a seed supply (5);
- a conveyor (6) configured to transfer seeds from the seed supply (5), with the seeds organized in the pattern (4) of seed positions defined by seed holding positions (10) of the conveyor (6), to the trays (2) or substrate and release extracted seeds (3) in the pattern (4) of seed positions into the trays (2) or substrate,
- at least one detector comprising at least a light source (12), such as a light beam and/or an array of LED's, and a sensor (13), such as at least one camera and/or a line scanner, and configured to detect seeds (3) at seed holding positions (10) of the conveyor (6) in transfer from the seed supply (5) to the trays (2) or substrate and generate a signal,
wherein the light source (12) is obliquely oriented at seed holding positions (10) of the conveyor (6), relative to a surface of the conveyor, to generate grazing light on or over the conveyor (6), for seeds (3) to cast detectable shadows (14) on the surface of the conveyor (6), and the sensor (13) is oriented at the surface of the conveyor (10) to detect shadows (14) on the conveyor (6), cast by seeds (3) at seed holding positions (10).

2. Seeder according to claim 1, wherein the signal from the sensor (13) indicates at least one seed related aspect from a group at least comprising: empty seed holding positions of the conveyor, from which seed positions, that remain empty in the pattern of seed positions in the trays (2) or substrate after transfer by the conveyor, is deducible; presence of part of a seed at any seed holding positions; multiple seeds at any seed holding positions; seed coating at any seed holding positions.

3. Seeder according to claim 1 or 2, wherein the surface of the conveyor (6) comprises
the seed holding positions thereon or therein, corresponding with the pattern of seed positions.

4. Seeder according to claim 1, 2 or 3, wherein the conveyor (6) comprises a seed transfer drum.

5. Seeder according to any preceding claim, wherein the conveyor (6) comprises seed holders connected to an underpressure or vacuum connection for attraction of seeds (3) from the supply (5).

6. Seeder according to claims 5, wherein the seed holders are provided at the seed holding positions (10).

7. Seeder according to any of the preceding claims, wherein the sensor (13) is oriented at an essentially perpendicular orientation onto the surface of the conveyor (6).

8. Seeder according to any of the preceding claims, further comprising a filler configured to, based on the signal from the detector (13), augment seeds (3) in the trays (2) or substrate after release of the seeds by the conveyor at the seed positions in the pattern (4), of which it is deducible from the signal from the sensor (13) that these remain empty in the pattern of seed positions in the trays or substrate after transfer by the conveyor.

9. Seeder according to claim 8, wherein the filler comprises a robot arm. robot arm (16).

10. Seeder according to claim 9, wherein the robot arm comprises a seed grabber (16).

11. Seeder according to claim 8, 9 or 10, comprising a controller (17) connected to the sensor (13) and the filler, and configured to drive the filler based on the signal from the sensor (13).

12. Seeding method of depositing seeds (3) in trays (2) or substrate in a pattern (4) of seed positions, comprising:
- supplying seeds;
- using a conveyor (6) to transfer supplied seeds, with the seeds (3) organized in the pattern of seed positions defined by seed holding positions (10), to the trays (2) or substrate;
- releasing extracted seeds in the pattern (4) of seed positions into the trays (2) or substrate.
- detecting seeds (3) at any seed holding positions (10) in the pattern, and
- generating a signal;
wherein detecting seeds and generating the signal comprises generating grazing light on or over the conveyor (6), for seeds (3) to cast detectable shadows on the surface of the conveyor (6), and detecting shadows on the conveyor, cast by seeds at seed holding positions (10).

13. Seeding method according to claim 12, wherein the signal indicates at least one seed related aspect from a group at least comprising: empty seed holding positions, from which seed positions (10), that remain empty in the pattern (4) of seed positions in the trays (2) or substrate after transferring the supplied seeds (2) to the trays (2) or substrate, is deducible; presence of part of a seed at any seed holding positions (10); multiple seeds at any seed holding positions; seed coating at any seed holding positions.

14. Seeding method according to claim 13, further comprising using a filler for augmenting, after releasing the seeds (3) at into the trays (2) or substrate and based on the signal, seeds in the trays or substrate at the seed positions in the pattern (4), of which it is deducible from the signal that these remain empty in the pattern (4) of seed positions in the trays (2) or substrate after transferring the supplied seeds to the trays (2) or substrate.

15. A non-transitory computer-readable storage medium storing instructions, that when executed by the controller of the seeder of claim 11, cause the seeder to perform the method of any one or more than one of the preceding claims 12 - 14.

## Patentansprüche

1. Sämaschine (1) zum Ablegen von Saatgut (3) in Saatkisten (2) oder Substrat in einem Muster (4) von Saatgutpositionen, mit:
- einem Saatgutvorrat (5);
- einer Fördereinrichtung (6), die dazu konfiguriert ist, Saatgut aus dem Saatgutvorrat (5) zu den Saatkisten (2) oder dem Substrat zu transportieren, wobei das Saatgut in dem Muster (4) von Saatgutpositionen angeordnet ist, das durch Saatgutablagepositionen (10) der Fördereinrichtung (6) festgelegt ist, und extrahiertes Saatgut (3) in dem Muster (4) von Saatgutpositionen in die Saatkiste (2) oder das Substrat freizusetzen,
- mindestens einem Detektor mit mindestens einer Lichtquelle (12), wie zum Beispiel einem Lichtstrahl und/oder einer LED-Anordnung, sowie einem Sensor (13), wie zum Beispiel mindestens einer Kamera und/oder einem Reihenscanner, und dazu konfiguriert, Saatgut (3) in Saatgutablagepositionen (10) der Fördereinrichtung (6) beim Transport aus dem Saatgutvorrat (5) zu den Saatkisten (2) oder dem Substrat zu erfassen und ein Signal zu erzeugen,
wobei die Lichtquelle (12) an Saatgutablagepositionen (10) der Fördereinrichtung (6) bezüglich einer Oberfläche der Fördereinrichtung schräg ausgerichtet ist, um Streiflicht auf oder über der Fördereinrichtung (6) zu erzeugen, so dass das Saatgut (3) erfassbare Schatten (14) auf die Oberfläche der Fördereinrichtung (6) wirft, und der Sensor (13) an der Oberfläche der Fördereinrichtung (6) ausgerichtet ist, um Schatten (14) auf der Fördereinrichtung (6) zu erfassen, die durch Saatgut (3) in Saatgutablagepositionen (10) geworfen werden.

2. Sämaschine nach Anspruch 1, wobei das Signal aus dem Sensor (13) mindestens einen saatgutbezogenen Aspekt aus einer Gruppe anzeigt, die zumindest folgendes aufweist: leere Saatgutablagepositionen der Fördereinrichtung, aus welchen Saatgutpositionen ableitbar sind, die in dem Muster von Saatgutpositionen in den Saatkisten (2) oder dem Substrat nach dem Transport durch die Fördereinrichtung leer bleiben; Vorliegen eines Teils eines Saatguts an beliebigen Saatgutablagepositionen; mehrfaches Saatgut an beliebigen Saatgutablagepositionen; Saatgutbeschichtung an beliebigen Saatgutablagepositionen.

3. Sämaschine nach Anspruch 1 oder 2, wobei die Oberfläche der Fördereinrichtung (6) die Saatgutablagepositionen auf diesem oder in diesem entsprechend dem Muster von Saatgutpositionen aufweist.

4. Sämaschine nach Anspruch 1, 2 oder 3, wobei die Fördereinrichtung (6) eine Saatguttransporttrommel aufweist.

5. Sämaschine nach einem vorhergehenden Anspruch, wobei die Fördereinrichtung (6) Saatguthalter aufweist, die mit einem Unterdruck- oder Vakuumanschluss zum Abziehen von Saatgut (3) aus dem Vorrat (5) verbunden sind.

6. Sämaschine nach Anspruch 5, wobei die Saatguthalter an den Saatgutablagepositionen (10) vorgesehen sind.

7. Sämaschine nach einem der vorhergehenden Ansprüche, wobei der Sensor (13) in einer im Wesentlichen senkrechten Ausrichtung auf die Oberfläche der Fördereinrichtung (6) ausgerichtet ist.

8. Sämaschine nach einem der vorhergehenden Ansprüche, weiterhin mit einer Fülleinrichtung, die auf der Basis des Signals aus dem Detektor (13) dazu konfiguriert ist, Saatgut (3) in den Saatkisten (2) oder im Substrat nach der Freisetzung des Saatguts durch die Fördereinrichtung an den Saatgutpositionen in dem Muster (4) zu erhöhen, von welchen vom Signal aus dem Sensor (13) ableitbar ist, dass diese in dem Muster von Saatgutpositionen in den Saatkisten oder dem Substrat nach dem Transport durch den Fördereinrichtung leer bleiben.

9. Sämaschine nach Anspruch 8, wobei die Fülleinrichtung einen Roboterarm (16) aufweist.

10. Sämaschine nach Anspruch 9, wobei der Roboterarm einen Saatgutgreifer (16) aufweist.

11. Sämaschine nach Anspruch 8, 9 oder 10, mit einer Steuerung (17), die mit dem Sensor (13) und der Fülleinrichtung verbunden ist und dazu konfiguriert ist, die Fülleinrichtung auf der Basis des Signals aus dem Sensor (13) zu betreiben.

12. Säverfahren zum Ablegen von Saatgut (3) in Saatkisten (2) oder Substrat in einem Muster (4) von Saatgutpositionen, mit den Schritten:
- Zuführen von Saatgut;
- Verwenden einer Fördereinrichtung (6) zum Transportieren von zugeführtem Saatgut zu den Saatkisten (2) oder dem Substrat, wobei das Saatgut (3) in dem durch Saatgutablagepositionen (10) festgelegten Muster von Saatgutpositionen angeordnet ist;
- Freisetzen von extrahiertem Saatgut in dem Muster (4) von Saatgutpositionen in die Saatkisten (2) oder das Substrat,
- Erfassen von Saatgut (3) an beliebigen Saatgutablagepositionen (10) in dem Muster, sowie
- Erzeugen eines Signals;
wobei das Erfassen von Saatgut und das Erzeugen des Signals das Erzeugen von Streiflicht auf oder über der Fördereinrichtung (6), so dass das Saatgut (3) erfassbare Schatten auf die Oberfläche der Fördereinrichtung (6) wirft, und das Erfassen von Schatten auf der Fördereinrichtung umfasst, die durch Saatgut in Saatgutablagepositionen (10) geworfen werden.

13. Säverfahren nach Anspruch 12, wobei das Signal mindestens einen saatgutbezogenen Aspekt aus einer Gruppe anzeigt, die zumindest die folgenden aufweist: leere Saatgutablagepositionen, aus welchen Saatgutpositionen (10) ableitbar sind, die in dem Muster (4) von Saatgutpositionen in den Saatkisten (2) oder dem Substrat nach dem Transport des zugeführten Saatguts (2) zu den Saatkisten (2) oder dem Substrat leer bleiben; Vorliegen eines Teils eines Saatguts an beliebigen Saatgutablagepositionen (10); mehrfaches Saatgut an beliebigen Saatgutablagepositionen; Saatgutbeschichtung an beliebigen Saatgutablagepositionen.

14. Säverfahren nach Anspruch 13, weiterhin mit der Verwendung einer Fülleinrichtung zum Erhöhen, nach der Freisetzung des Saatguts (3) in die Saatkisten (2) oder das Substrat und auf der Basis des Signals, von Saatgut in den Saatkisten oder dem Substrat in den Saatgutpositionen in dem Muster (4), von welchen aus dem Signal ableitbar ist, dass diese in dem Muster (4) von Saatgutpositionen in den Saatkisten (2) oder dem Substrat nach dem Transport des zugeführten Saatguts zu den Saatkisten (2) oder dem Substrat leer bleiben.

15. Nichtflüchtiges, computerlesbares Speichermedium, das Anweisungen speichert, die bei Ausführung durch die Steuerung der Sämaschine nach Anspruch 11 die Sämaschine dazu veranlassen, das Verfahren nach einem oder mehr als einem der vorhergehenden Ansprüche 12 bis 14 durchzuführen.

## Revendications

1. Semoir (1) configuré de manière à déposer des semences (3) sur des plateaux (2) ou substrat suivant un motif (4) de positions de semence, comprenant :
une source d'alimentation en semences (5) ;
un convoyeur (6) configuré de manière à transférer des semences à partir de la source d'alimentation en semences (5), les semences étant organisées suivant le motif (4) de positions de semence défini par les positions de retenue de semence (10) du convoyeur (6) sur les plateaux (2) ou substrat et à libérer les semences extraites (3) suivant le motif (4) des positions de semence sur les plateaux (2) ou substrat,
au moins un détecteur comprenant au moins une source de lumière (12), telle qu'un faisceau de lumière et/ou un réseau de LED, et un capteur (13), tel qu'au moins une caméra et/ou un dispositif de balayage linéaire, et configuré de manière à détecter des semences (3) aux positions de retenue de semence (10) du convoyeur (6) en transfert à partir de la source d'alimentation en semences (5) vers les plateaux (2) ou substrat et à produire un signal,
dans lequel la source de lumière (12) est orientée de manière oblique au niveau des positions de retenue de semence (10) du convoyeur (6), par rapport à une surface du convoyeur, afin de produire une lumière rasante sur le convoyeur (6) ou au-dessus de ce dernier, pour des semences (3) de manière à diffuser des ombres (14) pouvant être discernées sur la surface du convoyeur (6) et le capteur (13) est orienté au niveau de la surface du convoyeur (6) afin de détecter des ombres (14) sur le convoyeur (6), diffusées par les semences (3) au niveau des positions de retenue de semence (10).

2. Semoir selon la revendication 1, dans lequel le signal du capteur (13) indique au moins un aspect concernant la semence à partir d'un groupe comprenant au moins : des positions de retenue de semence vides du convoyeur, à partir desquelles des positions de semence, qui restent vides suivant le motif des positions de semence sur les plateaux (2) ou substrat après transfert par le convoyeur, peuvent être déduites ; la présence d'une partie d'une semence à des positions de retenue de semence quelconques ; des semences multiples à des positions de retenue de semence quelconques ; un revêtement de semence à des positions de retenue de semence quelconques.

3. Semoir selon la revendication 1 ou 2, dans lequel la surface du convoyeur (6) comprend les positions de retenue de semence au-dessus ou à l'intérieur, de manière à correspondre au motif de positions de semence.

4. Semoir selon la revendication 1, 2 ou 3, dans lequel le convoyeur (6) comprend un tambour de transfert de semence.

5. Semoir selon l'une quelconque des revendications précédentes, dans lequel le convoyeur (6) comprend des supports de semence reliés à un raccord en dépression ou sous vide afin d'assurer l'attraction des semences (3) à partir de la source d'alimentation (5).

6. Semoir selon la revendication 5, dans lequel les supports de semence sont agencés aux positions de retenue de semence (10).

7. Semoir selon l'une quelconque des revendications précédentes, dans lequel le capteur (13) est orienté suivant une orientation sensiblement perpendiculaire sur la surface du convoyeur (6).

8. Semoir selon l'une quelconque des revendications précédentes, comprenant, en outre, un dispositif de remplissage configuré, sur la base du signal du détecteur (13), de manière à augmenter la quantité de semences (3) sur les plateaux (2) ou substrat après la libération des semences par le convoyeur au niveau des positions de semence suivant le motif (4), dont on peut déduire, à partir du signal du capteur (13), que celles-ci restent vides suivant le motif de positions de semence sur les plateaux ou substrat après transfert par le convoyeur.

9. Semoir selon la revendication 8, dans lequel le dispositif de remplissage comprend un bras robotisé (16)

10. Semoir selon la revendication 9, dans lequel le bras robotisé comprend un dispositif de saisie de semence (16).

11. Semoir selon la revendication 8, 9 ou 10, comprenant une unité de commande (17) reliée au capteur (13) et au dispositif de remplissage, et configurée de manière à commander le dispositif de remplissage sur la base du signal à partir du capteur (13).

12. Procédé d'ensemencement destiné à déposer des semences (3) sur des plateaux (2) ou substrat suivant un motif (4) de positions de semence, comprenant :
l'alimentation des semences ;
l'utilisation d'un convoyeur (6) afin de transférer les semences délivrées, les semences (3) étant organisées suivant le motif de positions de semence défini par les positions de retenue de semence (10), vers les plateaux (2) ou substrat ;
la libération des semences extraites suivant le motif (4) de positions de semence sur les plateaux (2) ou substrat,
la détection des semences (3) à des positions de retenue de semence (10) quelconques suivant le motif, et
la production d'un signal ;
dans lequel la détection des semences et la production du signal comprennent la production de lumière rasante sur ou au-dessus du convoyeur (6) afin que les semences (3) diffusent des ombres pouvant être détectées sur la surface du convoyeur (6), et la détection d'ombres sur le convoyeur, diffusées par des semences au niveau des positions de retenue de semence (10).

13. Procédé d'ensemencement selon la revendication 12, dans lequel le signal indique au moins un aspect concernant la semence à partir d'un groupe comprenant au moins : des positions de retenue de semence vides, à partir desquelles des positions de semence (10), qui restent vides suivant le motif (4) de positions de semence sur les plateaux (2) ou substrat après transfert des semences délivrées (2) vers les plateaux (2) ou substrat, peuvent être déduites ; la présence d'une partie d'une semence à des positions de retenue de semence (10) quelconques ; des semences multiples à des positions de retenue de semence quelconques ; un revêtement de semence à des positions de retenue de semence quelconques.

14. Procédé d'ensemencement selon la revendication 13, comprenant, en outre, l'utilisation d'un dispositif de remplissage afin d'augmenter, après avoir libéré les semences (3) sur les plateaux (2) ou substrat et sur la base du signal, les semences sur les plateaux ou substrat aux positions de semence suivant le motif (4), dont on peut déduire à partir du signal que celles-ci restent vides suivant le motif (4) de positions de semence sur les plateaux (2) ou substrat après transfert des semences délivrées sur les plateaux (2) ou substrat.

15. Support de mémorisation non transitoire pouvant être lu par ordinateur, mémorisant des instructions qui, lorsqu'elles sont exécutées par l'unité de commande du semoir selon la revendication 11, conduisent le semoir à mettre en oeuvre le procédé selon l'une quelconque ou plusieurs des précédentes revendications 12 à 14.
